# EUROPÄISCHE PATENTANMELDUNG

(11) **EP 4 428 985 A1**
(43) Veröffentlichungstag der Anmeldung: **11.09.2024**
(21) Anmeldenummer: 23161016.3
(22) Anmeldetag: 09.03.2023
(51) Int. Cl.: H01M 10/42, H01M 10/54

(54) **TYPIDENTIFIKATION EINER BATTERIE**

(71) Anmelder: Siemens Aktiengesellschaft, 80333 München (DE)
(72) Erfinder: Baldauf, Manfred, 91056 Erlangen (DE); Franke, Martin, 14089 Berlin (DE); Schulte, Sascha, 91315 Höchstadt (DE)
(74) Vertreter: Siemens Patent Attorneys

(57) **Zusammenfassung**

Es wird ein Verfahren zur Typidentifikation einer Batterie, die für einen Recyclingverfahren vorgesehen ist, vorgeschlagen. Das erfindungsgemäße Verfahren ist wenigstens durch die folgenden Schritte gekennzeichnet:
- (S1) Bereitstellen einer Datenbank, die für mehrere Batterietypen einen zum jeweiligen Batterietyp zugehörigen ersten Sollwert umfasst, wobei zusätzlich jedem ersten Sollwert wenigstens ein batteriespezifischer zweiter Sollwert des jeweiligen Batterietyps zugeordnet ist;
- (S2) Erfassen eines der Datenbank entsprechenden ersten Istwertes der zu identifizierenden Batterie;
- (S3) Ermitteln des zweiten Sollwertes für die Batterie mittels eines Abgleichs des erfassten ersten Istwertes mit den ersten Sollwerten der Datenbank; und
- (S4) Erfassen eines der Datenbank entsprechenden batteriespezifischen zweiten Istwertes der zu identifizierenden Batterie, wobei die Typidentifikation der Batterie als erfolgreich gekennzeichnet wird, wenn der zweite Istwert mit dem ermittelten zweiten Sollwert übereinstimmt.

Weiterhin betrifft die Erfindung ein Verfahren zum Recycling einer Batterie sowie eine Vorrichtung zur Typidentifikation einer Batterie.

## Beschreibung

Die Erfindung betrifft ein Verfahren gemäß dem Oberbegriff des Patentanspruches 1, ein Recyclingverfahren gemäß dem Oberbegriff des Patentanspruches 12 sowie eine Vorrichtung gemäß dem Oberbegriff des Patentanspruches 13.

Batterien, beispielsweise Speicherbatterien von elektrischen Fahrzeugen, müssen nach Ablauf ihrer regulären Lebensdauer entsorgt, recycelt oder in eine 2nd-life-Anwendung überführt werden. Hierzu werden die Batterien in entsprechenden Verwertungseinrichtungen zerlegt und verarbeitet.

Insbesondere für eine Zerlegung oder Weiterverarbeitung ist eine zuverlässige Typidentifikation der Batterie, das heißt eine zuverlässige Identifikation des Typs der jeweiligen Batterie, erforderlich. Nur wenn jede eingelieferte Batterie eindeutig und zuverlässig erkannt wird, kann sie anschließend den richtigen Arbeitsschritten zugeordnet werden. Beispielsweise ist die Typidentifikation eine wesentliche Voraussetzung für ein Bereitstellen der richtigen Verfahrensanweisung und Zerlegungsanleitungen.

Weiterhin ist es erforderlich, den im Inneren der Batterie verbauten Zelltyp zu kennen. Das ist deshalb der Fall, da in der finalen Verwertung möglichst sortenrein die verschiedenen Zellchemien verarbeitet werden sollen. Es ist insbesondere nicht vorteilhaft Lithium-Zellen mit Bleiakkus in einen gemeinsamen Schmelzvorgang zu bringen. Selbst für Lithium-Zellen ist es vorteilhaft Mischungen, beispielsweise bezüglich der Typen LFP und LTO, zu vermeiden.

Nach dem Stand der Technik erfolgt typischerweise eine manuelle Typidentifikation, da die Mengen aktuell noch gering sind. In Zukunft werden sehr große Rücknahmemengen von mehreren 1000 Tonnen Batterien erwartet, sodass eine automatische Identifikation der Batterie erforderlich ist. Nach dem Stand der Technik werden zur automatischen Identifikation lediglich Gehäusemarkierungen, das heißt auf der Batterie angeordnete Identifikationscodes, verwendet. Diese können aber fehlen, beschädigt sein oder falsche Daten beinhalten. Dadurch können bei der Zerlegung falsche Werkzeuge zum Einsatz kommen, wodurch die Betriebssicherheit des Recyclingverfahrens nicht sichergestellt ist.

Der vorliegenden Erfindung liegt die Aufgabe zugrunde, eine verbesserte Typenidentifikation für Batterien bereitzustellen.

Die Aufgabe wird durch ein Verfahren mit den Merkmalen des unabhängigen Patentanspruches 1, durch ein Verfahren mit den Merkmalen des unabhängigen Patentanspruches 12 sowie durch eine Vorrichtung mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren zur Typidentifikation einer Batterie, die für ein Recyclingverfahren vorgesehen ist, ist wenigstens durch die folgenden Schritte gekennzeichnet:
- Bereitstellen einer Datenbank, die für mehrere Batterietypen einen zum jeweiligen Batterietyp zugehörigen ersten Sollwert umfasst, wobei zusätzlich jedem ersten Sollwert wenigstens ein batteriespezifischer zweiter Sollwert des jeweiligen Batterietyps zugeordnet ist;
- Erfassen eines der Datenbank entsprechenden ersten Istwertes der zu identifizierenden Batterie;
- Ermitteln des zweiten Sollwertes für die Batterie mittels eines Abgleichs des erfassten ersten Istwertes mit den ersten Sollwerten der Datenbank; und
- Erfassen eines der Datenbank entsprechenden batteriespezifischen zweiten Istwertes der zu identifizierenden Batterie, wobei die Typidentifikation der Batterie als erfolgreich gekennzeichnet wird, wenn der zweite Istwert mit dem ermittelten zweiten Sollwert übereinstimmt.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Gemäß der Erfindung wird eine Datenbank verwendet, die für mehrere Batterien beziehungsweise mehrere Batterietypen einen jeweiligen ersten Sollwert aufweist, wobei zusätzlich jedem ersten Sollwert ein batteriespezifischer zweiter Sollwert zugeordnet ist. Der erste Sollwert ist bevorzugt ein typspezifischer Code, beispielsweise ein auf er Batterie angeordneter Identifizierungscode. Als batteriespezifische zweite Sollwerte können Abmessungen und/oder weitere physikalische und/oder bautechnische Merkmale der jeweiligen Batterie verwendet werden. Die Datenbank wird erfindungsgemäß für das weitere Verfahren bereitgestellt.

Mittels der Datenbank ist somit jeder umfassten Batterie beziehungsweise jedem umfassten Batterietyp neben dem ersten Sollwert eine für die Batterie beziehungsweise dem Batterietyp charakteristische Eigenschaft (zweiter Sollwert) zugeordnet. Diese weitere Eigenschaft beziehungsweise dieses weitere Merkmal der Batterie wird erfindungsgemäß zusätzlich, das heißt ergänzend zum ersten Sollwert, für die Typidentifikation verwendet. Der zweite Sollwert ermöglicht somit sinnbildlich ein technisches Vier-Augen-Prinzip (Multi-Parameter-Prüfung) zur Typidentifikation, sodass dadurch der Typ der jeweiligen Batterie sicherer ermittelt werden kann. In diesem Sinne kann durch Überprüfung des zweiten Sollwertes, das heißt durch eine redundante Prüfung, eine Bestätigung des ersten Sollwertes, der bereits grundsätzlich den Batterietyp festlegt, ermöglicht werden. Es werden somit mehrere Datenquellen als Eingangsdaten zur Typidentifikation verwendet. Gemäß dem Verfahren wird für eine vorliegende Batterie zunächst ein der Datenbank entsprechender erster Istwert der zu identifizierenden Batterie erfasst. Hierbei entspricht ein erster Istwert der Datenbank, wenn es sich bezüglich des ersten Sollwertes um dieselbe technische/physikalische Größe handelt. Beispielsweise ist der erste Sollwert ein Identifizierungscode auf der Batterie, dann wird als erster Istwert ebenfalls ein auf der Batterie angeordneter Identifizierungscode erfasst.

Anschließend wird der zum ersten Istwert zugehörige zweite Sollwert durch einen Abgleich des erfassten ersten Istwertes mit der Datenbank, das heißt mit einem Abgleich zu den ersten Sollwerten, ermittelt. Mit anderen Worten wird analysiert, welchem ersten Sollwert der erfasste erste Istwert entspricht. Durch das Ermitteln des zum ersten Istwert zugehörigen ersten Sollwertes der Datenbank ist ebenfalls aufgrund der erfindungsgemäßen Struktur der Datenbank der zweite Sollwert ermittelt. Beispielsweise wird durch den ersten Istwert ein infrage kommender grundsätzlicher Batterietyp (erster Sollwert) festgelegt. Hierbei ist dem Batterietyp (erster Sollwert) gemäß der Datenbank beispielsweise ein durch den Abgleich bestimmtes Batteriegewicht als zweiter Sollwert zugeordnet.

In einem weiteren Schritt des Verfahrens wird nun ein der Datenbank wiederum entsprechender batteriespezifischen zweiter Istwert der zu identifizierenden Batterie erfasst, wobei die Typidentifikation der Batterie als erfolgreich gekennzeichnet wird, wenn der zweite Istwert mit dem ermittelten zweiten Sollwert übereinstimmt.

In dem oben genannten Beispiel wird das Batteriegewicht der Batterie als zweiter Istwert erfasst und mit dem in der Datenbank gespeicherten und gemäß des ermittelten Batterietyps (erster Sollwert) ermittelten zweiten Sollwert (Soll-Batteriegewicht) verglichen. Stimmt das erfasste Batteriegewicht (zweiter Istwert) mit dem Soll-Batteriegewicht (zweiter Sollwert) überein, dann wird die Typidentifikation als erfolgreich gekennzeichnet beziehungsweise dann ist diese erfolgreich. Im genannten Beispiel wird somit der zweite Istwert beziehungsweise der zweite Sollwert zur Überprüfung des aufgrund des Identifikationscodes ermittelten Batterietyps verwendet.

Zusammenfassend wird durch das Verfahren eine automatisierte Multi-Parameter-Prüfung des Batterietyps bereitgestellt, bei welcher nicht nur beispielsweise der Identifikationscode der Batterie verwendet wird, sondern zusätzlich weitere Merkmale/Eigenschaften der Batterie, beispielsweise das Batteriegewicht, verwendet werden. Nur wenn somit beide Istwerte mit ihren jeweiligen Sollwerten übereinstimmen, liegt eine für ein Recyclingverfahren sichere und eine im Sinne der vorliegenden Erfindung erfolgreiche Typidentifikation vor.

Das erfindungsgemäße Verfahren zum Recycling einer Batterie, ist gekennzeichnet dadurch, dass die Batterie beziehungsweise ihr Batterietyp mittels eines Verfahrens gemäß der vorliegenden Erfindung und/oder einer ihrer Ausgestaltungen identifiziert wird.

Insbesondere umfasst das Recyclingverfahren ein Zerlegungsverfahren, das heißt die Batterie ist für eine Zerlegung vorgesehen.

Es ergeben sich zum erfindungsgemäßen Verfahren zur Typidentifikation gleichartige, gleichwertige und gleichwirkende Vorteile und/oder Ausgestaltungen des erfindungsgemäßen Verfahrens zum Recycling.

Die erfindungsgemäße Vorrichtung zur Typidentifikation einer Batterie, die für ein Recyclingverfahren vorgesehen ist, umfasst eine Datenbank, eine Recheneinheit und eine Erfassungseinheit.

Die erfindungsgemäße Vorrichtung ist dadurch gekennzeichnet, dass
- die Datenbank für mehrere Batterietypen einen zum jeweiligen Batterietyp zugehörigen ersten Sollwert umfasst, wobei zusätzlich jedem ersten Sollwert wenigstens ein batteriespezifischer zweiter Sollwert des jeweiligen Batterietyps zugeordnet ist;
- die Erfassungseinheit zum Erfassen eines der Datenbank entsprechenden ersten Istwertes der zu identifizierenden Batterie ausgebildet ist;
- die Recheneinheit zum Ermitteln des zweiten Sollwertes für die Batterie mittels eines Abgleichs des erfassten ersten Istwertes mit den ersten Sollwerten der Datenbank ausgebildet ist; und
- die Erfassungseinheit zum Erfassen eines der Datenbank entsprechenden batteriespezifischen zweiten Istwertes der zu identifizierenden Batterie ausgebildet ist, wobei die Recheneinheit dazu ausgebildet ist, die Typidentifikation der Batterie als erfolgreich zu kennzeichen, wenn der zweite Istwert mit dem ermittelten zweiten Sollwert übereinstimmt.

Es ergeben sich zum erfindungsgemäßen Verfahren zur Typidentifikation gleichartige, gleichwertige und gleichwirkende Vorteile und/oder Ausgestaltungen der erfindungsgemäßen Vorrichtung.

Gemäß einer vorteilhaften Ausgestaltung der Erfindung wird die Typidentifikation der Batterie als erfolglos gekennzeichnet, wenn der zweite Istwert nicht mit dem zweiten Sollwert übereinstimmt.

Dadurch ist vorteilhafterweise sichergestellt, dass bei einer erfolglosen Typidentifikation kein Recycling beziehungsweise kein Recyclingprozess der Batterie, beispielsweise eine Zerlegung der Batterie, erfolgt.

In einer vorteilhaften Weiterbildung der Erfindung wird bei einer erfolglosen Typidentifikation durch einen Abgleich des zweiten Istwertes mit der Datenbank ein weiterer erster Sollwert ermittelt.

Mit anderen Worten wird vorteilhafterweise ermittelt, welcher erste Sollwert und somit welcher Batterietyp zum erfassten zweiten Istwert gemäß der Datenbank zugehörig ist. Dadurch kann ein bezüglich des ersten Istwertes beziehungsweise des ersten Sollwertes alternativer Batterietyp bereitgestellt werden. Mit anderen Worten wird eine zum ersten Istwert alternative Identifikation ermittelt. Das ist dann vorteilhaft, wenn beispielsweise ein ID-Label einer Batterie eines Herstellers auf eine Batterie eines anderen Herstellers aufgebracht wurde, beispielsweise unbeabsichtigt bei einem Transport der Batterie. Würde die Typidentifikation wie im Stand der Technik lediglich aufgrund des ID-Labels erfolgen, so käme es zu einer Falschidentifikation. Gemäß dem vorliegenden Verfahren wird dies erkannt und es kann zudem eine alternative Identifikation bereitgestellt werden. Dieser ermittelte alternative Batterietyp kann beispielsweise als zuverlässig angenommen werden oder einer weiteren manuellen Prüfung zugeführt werden.

Gemäß einer vorteilhaften Ausgestaltung der Erfindung erfolgt somit bei einer erfolglosen Typidentifikation eine weitere Prüfung, insbesondere eine zusätzliche manuelle Prüfung.

Dadurch kann die Sicherheit bezüglich der Typidentifikation weiter verbessert werden. Hierbei erfolgt die manuelle Prüfung beispielsweise durch einen Prüfer vor Ort.

In einer vorteilhaften Weiterbildung der Erfindung wird als erster Sollwert ein Identifizierungscode der jeweiligen Batterie verwendet.

Mit anderen Worten wird zunächst durch den Identifizierungscode ein Batterietyp durch den Abgleich mit der Datenbank ermittelt. In der Datenbank ist dann dem Identifizierungscode beziehungsweise dem Batterietyp wenigstens ein weiteres technisches/physikalisches Merkmal der Batterie zugeordnet (zweiter Sollwert).

Gemäß einer vorteilhaften Ausgestaltung der Erfindung wird als Identifizierungscode ein auf der zu identifizierenden Batterie angebrachter Code verwendet.

Hierbei kann der Code als eine Gehäusemarkierung der Batterie ausgebildet sein, beispielsweise ein ID-Label, insbesondere ein QR-Code, eine Gravur oder ein sonstiger maschinenlesbarer und erfassbarer Identifizierungscode.

Alternativ wird als Identifizierungscode bevorzugt ein Code auf einem Lieferschein der zu identifizierenden Batterie verwendet.

Hierbei kann der Code durch einen Scan des Lieferscheins erfasst werden.

In einer vorteilhaften Weiterbildung der Erfindung werden/wird als batteriespezifischer zweiter Sollwert eine Abmessung, eine Außenkontur, ein Gewicht und/oder eine Farbe der Batterie verwendet.

Vorteilhafterweise sind die genannten Größen effizient technisch erfassbar und auswertbar.

Gemäß einer vorteilhaften Ausgestaltung der Erfindung werden/wird als batteriespezifischer zweiter Sollwert eine relative Anordnung von Steckverbindungen und/oder eine Anzahl von Schraublöchern der Batterie verwendet.

Dadurch kann vorteilhafterweise die Sicherheit der Typidentifikation weiter verbessert werden.

In einer vorteilhaften Weiterbildung der Erfindung umfasst die Datenbank für jeden ersten Sollwert mehrere batteriespezifische zweite Sollwerte, wobei entsprechend den mehreren zweiten Sollwerten mehrere zweite Istwerte für die zu identifizierende Batterie erfasst werden.

Mit anderen Worten werden vorteilhafterweise mehrere batteriespezifische Eigenschaften/Merkmale/Größen zur Überprüfung beziehungsweise zur Bestätigung des durch den Abgleich des ersten Istwertes mit dem ersten Sollwert ermittelten Batterietyps verwendet. Dadurch kann vorteilhafterweise die Sicherheit der Typidentifikation weiter verbessert werden.

Gemäß einer vorteilhaften Ausgestaltung der Erfindung wird hierbei die Typidentifikation der Batterie als teilweise erfolgreich gekennzeichnet, wenn lediglich einer der zweiten Istwerte nicht mit dem zugehörigen ermittelten zweiten Sollwert übereinstimmt.

Mit anderen Worten stimmen alle zweiten Istwerte bis auf einen zweiten Istwert mit ihren zugehörigen zweiten Sollwerten überein. Dadurch ist die Typidentifikation teilweise bestätigt beziehungsweise teilweise erfolgreich. Beispielsweise könnten alle Außenmaße übereinstimmen, das Gewicht aber nicht. Als Ursache kann beispielsweise der Verbau von Zellen eines anderen Herstellers im Rahmen eines Modellwechsels genannt werden. Dann würde die eingeschränkte Identifikation bestätigen, dass es sich um eine spezielle Batterie, beispielsweise VW i3, handelt, das Baujahr und die Produktionslinie - manchmal verwenden verschiedene Fabriken Subkomponenten verschiedener Lieferanten - aber nicht zweifelsfrei festgestellt werden können. Auch in diesem Fall ist eine weitere manuelle Prüfung vorgesehen und erforderlich.

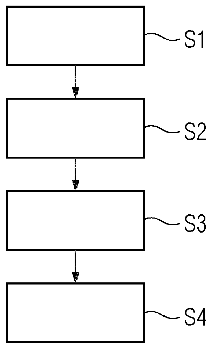

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Ablaufdiagramm eines Verfahrens gemäß einer Ausgestaltung der Erfindung.

Gleichartige, gleichwertige oder gleichwirkende Elemente können in der Figur mit denselben Bezugszeichen versehen sein.

Die Figur zeigt ein Ablaufdiagramm eines Verfahrens zur Typidentifikation einer Batterie, das heißt ein Verfahren zur Ermittlung des Batterietyps einer Batterie, gemäß einer Ausgestaltung der vorliegenden Erfindung.

Hierbei ist die Batterie für einen Recyclingverfahren, insbesondere ein Zerlegungsverfahren, vorgesehen. Hierzu ist vorab eine Typidentifikation erforderlich.

Gemäß dem dargestellten Ausführungsbeispiel wird in einem ersten Schritt S1 des Verfahrens eine Datenbank bereitgestellt, die für mehrere Batterietypen einen zum jeweiligen Batterietyp zugehörigen Identifikationscode (erster Sollwert) umfasst. Hierbei ist zusätzlich jedem Identifikationscode wenigstens ein batteriespezifischer zweiter Sollwert, das heißt eine batteriespezifische technische Größe, der jeweiligen Batterie zugeordnet. Die Datenbank kann beispielsweise durch eine Recheneinheit bereitgestellt werden.

In einem zweiten Schritt S2 des Verfahrens wird ein Ist-Identifikationscode der zu identifizierenden Batterie erfasst. Dies kann beispielsweise mittels einer Erfassungseinheit erfolgen. Der Identifikationscode ist insbesondere auf der Batterie in Form eines QR-Codes, eines ID-Labels und/oder einer Gravur angebracht. Alternativ oder ergänzend kann der Identifikationscode mittels eines Lieferscheins der Batterie erfasst werden, beispielsweise durch einen Scan des Lieferscheins.

Gemäß einem dritten Schritt S3 des Verfahrens wird der zweite Sollwert für die Batterie mittels eines Abgleichs des erfassten Identifikationscodes (erster Istwert) mit den in der Datenbank gespeicherten Identifikationscodes (erste Sollwerte) ermittelt. Mit anderen Worten wird geprüft, mit welchem Identifikationscode und somit mit welchem Batterietyp der erfasste Identifikationscode übereinstimmt. Dadurch wird ein grundsätzlich für die Batterie infrage kommender Batterietyp ermittelt. Dem ermittelten Identifikationscode in der Datenbank ist ein zweiter Sollwert, beispielsweise ein Soll-Batteriegewicht, zugeordnet.

In einem vierten Schritt S4 des Verfahrens wird ein der Datenbank entsprechenden batteriespezifischen zweiter Istwert, vorliegend das Ist-Batteriegewicht, der zu identifizierenden Batterie erfasst, wobei die Typidentifikation der Batterie als erfolgreich gekennzeichnet wird, wenn das erfasste Ist-Batteriegewicht (zweiter Istwert) mit dem vorab durch den erfassten Identifikationscode ermittelten Soll-Batteriegewicht (zweiter Sollwert) übereinstimmt.

Mit anderen Worten werden gemäß dem vorliegenden Ausführungsbeispiel für jede Batterie beziehungsweise für jeden Batterietyp neben der Beschriftung (Identifikationscodes) mehrere weitere charakteristische Eigenschaften und Merkmale, die vorteilhafterweise mit einfachen technischen Mitteln gemessen oder überprüft werden können, zur Typidentifikation verwendet. Diese sind mittels der Datenbank als Referenz gespeichert und werden bei der Identifikation als sinnbildlich "zweite Meinung" im technischen Sinne beziehungsweise als Multi-Parameter-Prüfung verwendet.

Hierzu wird beispielsweise ein grundsätzlich infrage kommender Batterietyp der Batterie anhand des Lieferscheins oder eines aufgedruckten Codes identifiziert. Wenn dies erfolgt ist, wird mittels der Datenbank eine Liste von für diese Batterie charakteristischen zweiten Sollwerte abgerufen. Diese können beispielsweise die Abmessungen, die Außenkontur, das Gewicht und/oder die Farbe der Batterie umfassen. Weiterhin sind die Position und Orientierung eines speziellen Steckers am Gehäuse, die Anzahl und Position von Schraublöchern und jedes beliebig weitere individuell messbares technisches Merkmal verwendbar. Eine erfindungsgemäße Vorrichtung kann mittels einer Erfassungseinheit, beispielsweise einem 3D-Scanner und/oder einer Kamera, die so festgelegten Werte/Größen erfassen und mittels einer Recheneinheit mit den in der Datenbank gespeicherten beziehungsweise hinterlegten zweiten Sollwerten abgleichen.

Dadurch wird vorteilhafterweise ein Verfahren zur Typidentifikation einer Batterie bereitgestellt, bei welchem Eingangsmessdaten mehrerer verschiedener Quellen, bevorzugt ID-Merkmale aus Dokumenten und Labels sowie technischer Kennwerte der Batterie, mit Sollwerten eines bereitgestellten Datensatzes, automatsiert mittels eines Soll/Ist-Vergleichs verglichen werden. Hierbei kann das Verfahren beziehungsweise das Verknüpfen der Istwerte mit den jeweiligen Sollwerten mittels einer Recheneinheit der Vorrichtung erfolgen. Die Recheneinheit umfasst hierzu insbesondere ein entsprechend trainiertes und ausgestaltetes neuronales Netz.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt
- S3: dritter Schritt
- S4: vierter Schritt

## Patentansprüche

1. Verfahren zur Typidentifikation einer Batterie, die für ein Recyclingverfahren vorgesehen ist, **gekennzeichnet durch** die Schritte:
- (S1) Bereitstellen einer Datenbank, die für mehrere Batterietypen einen zum jeweiligen Batterietyp zugehörigen ersten Sollwert umfasst, wobei zusätzlich jedem ersten Sollwert wenigstens ein batteriespezifischer zweiter Sollwert des jeweiligen Batterietyps zugeordnet ist;
- (S2) Erfassen eines der Datenbank entsprechenden ersten Istwertes der zu identifizierenden Batterie;
- (S3) Ermitteln des zweiten Sollwertes für die Batterie mittels eines Abgleichs des erfassten ersten Istwertes mit den ersten Sollwerten der Datenbank; und
- (S4) Erfassen eines der Datenbank entsprechenden batteriespezifischen zweiten Istwertes der zu identifizierenden Batterie, wobei die Typidentifikation der Batterie als erfolgreich gekennzeichnet wird, wenn der zweite Istwert mit dem ermittelten zweiten Sollwert übereinstimmt.

2. Verfahren gemäß Anspruch 1, **gekennzeichnet dadurch, dass** die Typidentifikation der Batterie als erfolglos gekennzeichnet wird, wenn der zweite Istwert nicht mit dem zweiten Sollwert übereinstimmt.

3. Verfahren gemäß Anspruch 2, **gekennzeichnet dadurch, dass** bei einer erfolglosen Typidentifikation durch einen Abgleich des zweiten Istwertes mit der Datenbank ein weiterer erster Sollwert ermittelt wird.

4. Verfahren gemäß Anspruch 2 oder 3, **gekennzeichnet dadurch, dass** bei einer erfolglosen Typidentifikation eine weitere Prüfung, insbesondere eine zusätzliche manuelle Prüfung, erfolgt.

5. Verfahren gemäß einem der vorhergehenden Ansprüche, **gekennzeichnet dadurch, dass** als erster Sollwert ein Identifizierungscode der jeweiligen Batterie verwendet wird.

6. Verfahren gemäß Anspruch 5, **gekennzeichnet dadurch, dass** als Identifizierungscode ein auf der zu identifizierenden Batterie angebrachter Code verwendet wird.

7. Verfahren gemäß Anspruch 5, **gekennzeichnet dadurch, dass** als Identifizierungscode ein Code auf einem Lieferschein der zu identifizierenden Batterie verwendet wird.

8. Verfahren gemäß einem der vorhergehenden Ansprüche, **gekennzeichnet dadurch, dass** als batteriespezifischer zweiter Sollwert eine Abmessung, eine Außenkontur, ein Gewicht und/oder eine Farbe der Batterie verwendet werden/wird.

9. Verfahren gemäß einem der vorhergehenden Ansprüche, **gekennzeichnet dadurch, dass** als batteriespezifischer zweiter Sollwert eine relative Anordnung von Steckverbindungen und/oder eine Anzahl von Schraublöchern der Batterie verwendet werden/wird.

10. Verfahren gemäß einem der vorhergehenden Ansprüche, **gekennzeichnet dadurch, dass** die Datenbank für jeden ersten Sollwert mehrere batteriespezifische zweite Sollwerte umfasst, wobei entsprechend den mehreren zweiten Sollwerten mehrere zweite Istwerte für die zu identifizierende Batterie erfasst werden.

11. Verfahren gemäß Anspruch 10, **gekennzeichnet dadurch, dass** die Typidentifikation der Batterie als teilweise erfolgreich gekennzeichnet wird, wenn lediglich einer der zweiten Istwerte nicht mit dem zugehörigen ermittelten zweiten Sollwert übereinstimmt.

12. Verfahren zum Recycling einer Batterie, **gekennzeichnet dadurch, dass** die Batterie mittels eines Verfahrens gemäß einem der vorhergehenden Ansprüche identifiziert wird.

13. Vorrichtung zur Typidentifikation einer Batterie, die für ein Recyclingverfahren vorgesehen ist, umfassend eine Datenbank, eine Recheneinheit und eine Erfassungseinheit, **dadurch gekennzeichnet, dass**
- die Datenbank für mehrere Batterietypen einen zum jeweiligen Batterietyp zugehörigen ersten Sollwert umfasst, wobei zusätzlich jedem ersten Sollwert wenigstens ein batteriespezifischer zweiter Sollwert des jeweiligen Batterietyps zugeordnet ist;
- die Erfassungseinheit zum Erfassen eines der Datenbank entsprechenden ersten Istwertes der zu identifizierenden Batterie ausgebildet ist;
- die Recheneinheit zum Ermitteln des zweiten Sollwertes für die Batterie mittels eines Abgleichs des erfassten ersten Istwertes mit den ersten Sollwerten der Datenbank ausgebildet ist; und
- die Erfassungseinheit zum Erfassen eines der Datenbank entsprechenden batteriespezifischen zweiten Istwertes der zu identifizierenden Batterie ausgebildet ist, wobei die Recheneinheit dazu ausgebildet ist, die Typidentifikation der Batterie als erfolgreich zu kennzeichnen, wenn der zweite Istwert mit dem ermittelten zweiten Sollwert übereinstimmt.
